# EUROPÄISCHE PATENTSCHRIFT

(11) **EP 3 990 213 B1**
(45) Veröffentlichungstag und Bekanntmachung des Hinweises auf die Patenterteilung: **27.09.2023**
(21) Anmeldenummer: 20737347.3
(22) Anmeldetag: 24.06.2020
(51) Int. Cl.: B23P 11/00, F16B 4/00, F16H 7/20, F16H 7/08, F16H 7/12

(54) **PRESSFÜGE-FORMSCHLUSSVERBINDUNG UND RIEMENSPANNER MIT EINER SOLCHEN VERBINDUNG**
PRESS-FIT-INTERLOCKING CONNECTION AND BELT TENSIONER HAVING SUCH A CONNECTION
LIAISON DE PRESSE PAR COMPLÉMENTARITÉ DE FORME ET TENDEUR DE COURROIE POURVU D'UNE TELLE LIAISON

(30) Priorität: 26.06.2019 DE 102019117170
(43) Veröffentlichungstag der Anmeldung: 04.05.2022
(73) Patentinhaber: Schaeffler Technologies AG & Co. KG, 91074 Herzogenaurach (DE)
(72) Erfinder: MARICIC, Zoran, 90768 Fürth (DE); KURZ, Alexander, 91074 Herzogenaurach (DE)
(86) Internationale Anmeldenummer: PCT/DE2020/100535
(87) Internationale Veröffentlichungsnummer: WO 2020/259758

(56) Entgegenhaltungen:
- DE-A1-102011 088 214
- DE-A1-102017 109 454
- DE-A1-102018 120 933

## Beschreibung

Die Erfindung betrifft eine Pressfüge-Formschlussverbindung eines Innenteils mit einem Außenteil, das auf dem Innenteil befestigt ist, wobei:
- die Pressfügeverbindung eine zylindrische Pressfuge zwischen dem Außenteil und dem Innenteil umfasst
- und die Formschlussverbindung durch einen Axialanschlag mit sich kontaktierenden Anschlagteilen am Innenteil und am Außenteil gebildet ist.

Pressfüge-Formschlussverbindungen, bei denen ein Außenteil und ein Innenteil sowohl mittels eines (kraftschlüssigen) Pressverbands als auch mittels eines axialen Formschlusses miteinander gefügt sind, sind beispielsweise aus DE 20 2012 100 550 U1, EP 2 593 691 B1 und DE 10 2015 226 218 A1 sowie DE 10 2011 088 214 A1 bekannt. Der Formschluss verhindert ein axiales Lösen der beiden Bauteile voneinander, falls der Kraftschluss infolge einer Überlast versagt.

Die Erfindung betrifft ferner einen Nebenaggregate-Riementrieb einer Brennkraftmaschine mit einem Riemenspanner. Der Riementrieb umfasst einen Generator mit einer vom Riemen umschlungenen Generatorriemenscheibe, und der Riemenspanner weist Folgendes auf:
- einen am Generator befestigten Lagerflansch, der die Drehachse der Generatorriemenscheibe umschließt,
- einen ersten Spannarm und einen zweiten Spannarm, die kreisringförmig ausgebildet und am Lagerflansch gegenseitig schwenkbar gelagert sind,
- zwei an den Spannarmen angebrachte Spannrollen, die den Riemen in dessen Umlaufrichtung vor und hinter der Generatorriemenscheibe mit Vorspannkraft beaufschlagen,
- eine zwischen den Spannarmen eingespannte Feder zur Erzeugung der Vorspannkraft,
- und eine mit dem ersten Spannarm verbundene Verschlusshülse, die mittels einer Pressfüge-Formschlussverbindung auf einem Hülsenabschnitt des ersten Spannarms befestigt ist.

Der erste Spannarm ist mittels der Verschlusshülse radial gegen eine Innenmantelfläche des Lagerflanschs gleitgelagert, und der zweite Spannarm ist radial gegen eine Außenmantelfläche des Lagerflanschs gleitgelagert.

Ein derartiger Riemenspanner ist aus der DE 10 2018 120 933 A1 bekannt. Die Pressfüge-Formschlussverbindung der Verschlusshülse mit dem Hülsenabschnitt des ersten Spannarms umfasst einen Längspressverband als Pressfügeverbindung und eine radial auswärtige Rollierung oder Verstemmung des Hülsenabschnitts als Formschlussverbindung.

Der vorliegenden Erfindung liegt die Aufgabe zugrunde, eine Pressfüge-Formschlussverbindung bzw. einen Riemenspanner mit einer Pressfüge-Formschlussverbindung im Hinblick auf eine erhöhte Sicherheit gegen Lösen der Verbindung zu verbessern.

Die Lösung dieser Aufgabe ergibt sich bezüglich der Pressfüge-Formschlussverbindung durch einen Kantenträger im Kontakt der Anschlagteile, die sich in einer ersten Hauptkrümmungsebene, zu der die Zylinderachse der Pressfuge senkrecht steht, mit gleich großen Krümmungsradien kontaktieren und in einer zweiten Hauptkrümmungsebene, in der die Zylinderachse der Pressfuge liegt, mit unterschiedlich großen Krümmungsradien kontaktieren.

Der Kantenträger, der den axialen Formschluss entweder als Endabschnitt des Pressverbands oder als Hertzscher Kontakt mit Linienberührung bildet, bewirkt im Kontakt der Anschlagteile lokale Materialspannungen, die bei Axialbelastung des Anschlags so überhöht sind, dass die Tragkante in die Oberfläche des sich dementsprechend elastisch und gegebenenfalls auch plastisch verformenden Kontaktpartners eindringt. Gegenüber reinen Flächenkontakten verstärkt dieses Eindringen die Sicherheit des Formschluss' gegen Lösen dadurch, dass sich die Anschlagteile - bildhaft ausgedrückt - lokal ineinander eingraben und so die gegenseitige Verschiebung in Anschlagrichtung zusätzlich blockieren. Die Lösung der Aufgabe ergibt sich bezüglich des Riemenspanners durch die Verwendung der erfindungsgemäßen Pressfüge-Formschlussverbindung zum Befestigen der Verschlusshülse (Außenteil) auf dem Hülsenabschnitt des ersten Spannarms (Innenteil).

Die nachfolgende Beschreibung und die Zeichnungen stellen eine erfindungsgemäße Pressfüge-Formschlussverbindung an einem Riemenspanner für einen Nebenaggregate-Riementrieb einer Brennkraftmaschine nach den Ansprüchen dar.

Sofern nicht anders erwähnt, sind dabei gleiche oder funktionsgleiche Merkmale oder Bauteile mit gleichen Bezugszeichen versehen.

Es zeigen:
- Figur 1: den Riemenspanner in Draufsicht;
- Figur 2: den Riemenspanner in explodierter Darstellung;
- Figur 3: den Schnitt A-A gemäß Figur 1 in perspektivischer Darstellung;
- Figur 4: den ersten Spannarm des Riemenspanners mit der damit gefügten Verschlusshülse in isolierter Darstellung;
- Figur 5: die Einzelheit X aus Figur 4;
- Figur 6: die Einzelheit Y aus Figur 5, wobei die gefügten Bauteile schematisch und mit gegenseitiger Durchdringung vereinfacht dargestellt sind.

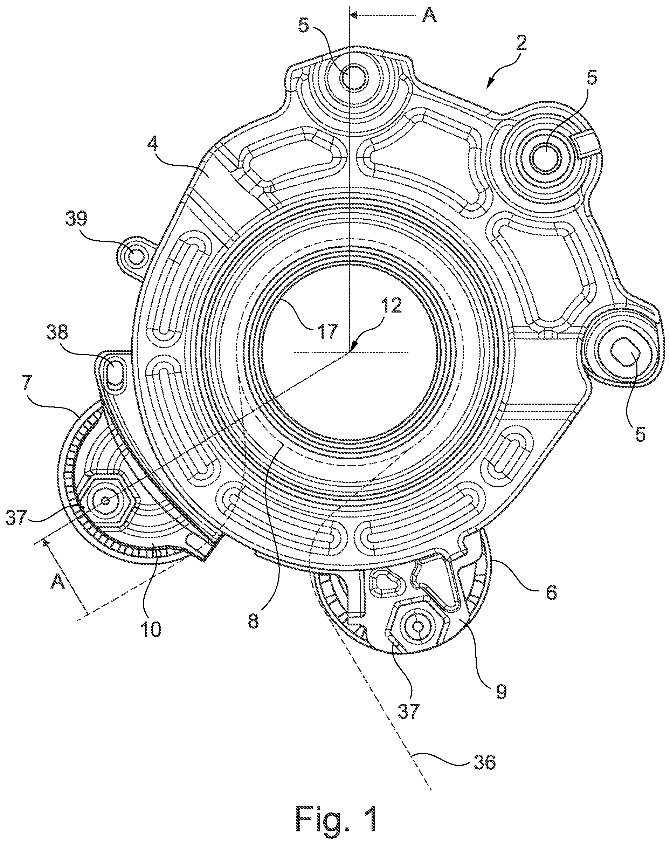

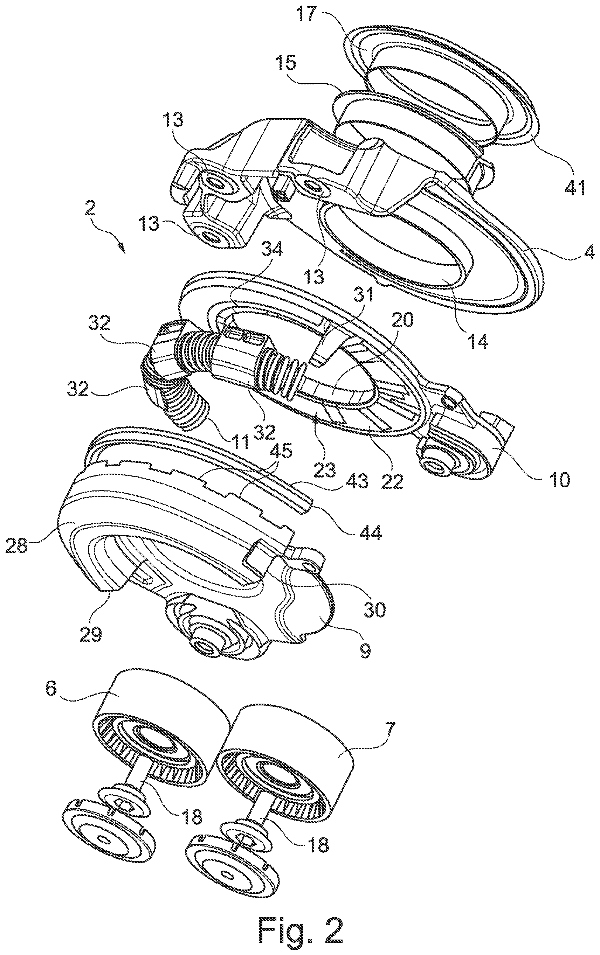

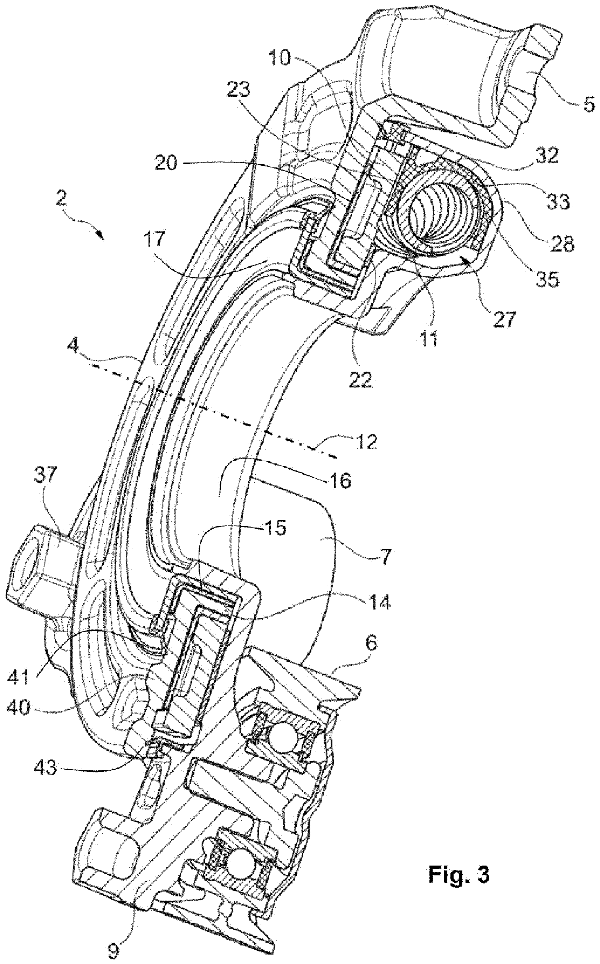

Die Figuren 1 bis 3 zeigen einen erfindungsgemäßen Riemenspanner 2 eines Nebenaggregate-Riementriebs einer Brennkraftmaschine. Der Riementrieb treibt unter anderem einen Startergenerator an, der in bekannter Weise nicht nur als Generator zur Stromerzeugung, sondern auch zum Riemenstart oder Boosten der Brennkraftmaschine dient und in diesem Fall als (antreibender) Motor betrieben wird. Der Riemenspanner 2 ist mittels eines Lagerflanschs 4, der die Drehachse 12 der (in Figur 1 gestrichelt eingezeichneten) Generatorriemenscheibe 8 umschließt, an drei Auflageflächen 13 mit Anschraubpunkten 5 am frontseitigen, d.h. riemenseitigen Teil des Startergenerators befestigt und umfasst zwei Spannrollen 6 und 7, die den (in Figur 1 ebenfalls gestrichelt eingezeichneten) Riemen 36 in dessen Umlaufrichtung vor und hinter der Generatorriemenscheibe 8 vorspannen. Die Spannrollen 6, 7 sind an einem ersten bzw. zweiten Spannarm 9 und 10 befestigt, die jeweils kreisringförmig geschlossen ausgebildet und sowohl gegenseitig als auch gegenüber dem Startergenerator radial und axial auf dem Lagerflansch 4 gleitgelagert sind. Die Lagerung der Spannarme 9, 10 erfolgt vorliegend konzentrisch zur Drehachse 12, kann alternativ aber auch exzentrisch dazu sein, solange die Generatorriemenscheibe 8 und der umschlingende Riemen 36 ausreichenden Freigang zum Riemenspanner 2 haben. Die Befestigung der Spannrollen 6, 7 erfolgt nach dem sogenannten Pulley-down-Design jeweils über eine Schraube 18, deren Schraubenkopf dem Startergenerator zugewandt ist.

Die Riemenvorspannkraft wird mittels einer zwischen den Spannarmen 9, 10 eingespannten Feder 11 erzeugt, wobei die Spannrollen 6, 7 das sich in Abhängigkeit des Betriebszustands des Startergenerators mit dem Zugtrum vertauschende Leertrum des Riemens 36 vorspannen. Der auf jedem Spannarm 9, 10 angeformte Sechskant 37 dient jeweils als Eingriff für ein Montagewerkzeug, mit dem die beiden Spannarme 9 und 10 entgegen der Federkraft soweit auseinander gespreizt werden können, bis ein Arretierstift in dann zwei miteinander fluchtende Arretierbohrungen 38 und 39 eingesteckt werden kann und die beiden Spannarme 9 und 10 in dieser aufgespannten (Montage-)Position gegeneinander fixiert.

Die die Riemenvorspannung erzeugende Feder 11 ist eine Bogenfeder, die parallel zur Riemenebene in einem entsprechend bogenförmigen Federraum 27 aufgenommen ist. Dieser ist axial einerseits von einer umfänglich bogenförmigen Auswölbung 28 des ersten Spannarms 9 und andererseits von der mit einem Gleitlagerring 22 versehenen Stirnseite 23 des zweiten Spannarms 10 begrenzt und verläuft mit der darin aufgenommenen Feder 11 in weitestgehender axialer Überlappung mit den Spannrollen 6, 7. Die umfängliche Erstreckung des Federraums 27 verläuft im Umschlingungsbereich der Generatorriemenscheibe 8 und ist durch zwei Wände 29 und 30 an den umfänglichen Enden der Auswölbung 28 begrenzt.

Wie allgemein bekannt, ist eine Bogenfeder stets eine Schraubendruckfeder mit kreisbogenförmig offener Längserstreckung. Die Feder 11 kann entweder bereits mit Bogenform oder alternativ als gerade Schraubendruckfeder hergestellt sein, die sich erst beim Einlegen in den Federraum 27 bogenförmig verformt. Die Bogenfeder vereint die relativ hohe Formnutzzahl einer Torsionsfeder mit der umfänglichen Beschränkung der Feder 11 auf deren bogenförmigen Bauraum (die Formnutzzahl vergleicht die aufgenommene Energie einer Feder mit der maximal möglichen gespeicherten Arbeit bei gleichem Federvolumen und gleicher Werkstoffspannung). Diese Art der Spannerbefederung erlaubt die lagerungstechnisch günstige Geometrie der ringförmig geschlossenen Spannarme 9, 10, da die Feder 11 aufgrund des ausreichend hohen Federvermögens im wesentlichen problemlos im Umschlingungsbereich der Generatorriemenscheibe 8 positioniert werden und dabei axial mit den Spannrollen 6, 7 überlappen kann. Außerdem können die Spannrollen 6, 7 und damit die Riemenebene mit vergleichsweise geringem Axialabstand zum Startergenerator verlaufen, so dass die Momentenbelastung des vorderen Generatorwellenlagers klein bleibt.

Insbesondere, aber dennoch nicht nur für den Fall, dass eine Bogenfeder mit einem für das Federwickeln ungünstig großen Bogenwinkel erforderlich ist, können auch zwei oder mehr Bogenfedern oder gerade Schraubendruckfedern in Reihenschaltung und ein Federraum 27 mit entsprechend daran angepasstem Bogenwinkel vorgesehen sein. Unabhängig davon sind auch parallel geschaltete Bogenfedern in Form eines Federpakets mit einer äußeren und einer inneren Bogenfeder möglich. Mit Hilfe dieser Parameter lässt sich die Gesamtcharakteristik der Spannerbefederung in weiten Grenzen variieren.

Die Feder 11 ist zwischen der einen Wand 29 des ersten Spannarms 9 und einem Mitnehmer 31 des zweiten Spannarms 10 eingespannt, um die beiden Spannrollen 6, 7 aufeinander zu mit Drehmoment zu beaufschlagen. Der Mitnehmer 31 steht gegenüber der Stirnseite 23 axial hervor und ragt vor der anderen Wand 30 in den Federraum 27 hinein. Dadurch, dass der Mitnehmer 31 vollständig oder zumindest überwiegend in axialer Überlappung mit der Spannrolle 7 verläuft, erzeugt das von der Feder 11 und der Spannrolle 7 eingebrachte Reaktionskräftepaar ein vergleichsweise kleines Kippmoment in der Schwenklagerung des zweiten Spannarms 10.

Am Außenbogen der Feder 11 sind drei U-förmige Gleitschuhe 32 fixiert, die die Reaktionskraft der Feder 11 in radial auswärtiger Richtung und axial an zumindest einem der Spannarme 9, 10 abstützen. Vorliegend erfolgt die axiale Abstützung an beiden Spannarmen 9, 10. Die radiale Abstützung erfolgt durch den Gleitkontakt der Gleitschuhe 32 mit dem bogenförmigen Außenmantel 33 des Federraums 27. Die axiale Abstützung, die ein axiales Ausweichen oder Ausknicken der Feder 11 verhindert, erfolgt seitens des Startergenerators durch den Gleitkontakt der dort im wesentlichen ebenen Gleitschuhe 32 mit der Stirnseite 23, die in diesem Kontaktbereich aufgrund einer Aussparung 34 im Gleitlagerring 22 metallisch freiliegt. Auf der gegenüberliegenden Seite erfolgt die axiale Abstützung durch den Gleitkontakt der Gleitschuhe 32 mit dem Boden 35 des Federraums 27.

Durch die Vielzahl der Gleitkontakte, die in dem dargestellten Ausführungsbeispiel jeweils durch eine Kunststoffoberfläche einerseits und eine Metalloberfläche anderseits gebildet sind, ergibt sich ein weitgehender Spielraum in der Abstimmung der Reib- und mithin der betrieblichen Dämpfungscharakteristik des Riemenspanners 2. Bei der Abstimmung der Gleitkontakte im Hinblick auf deren jeweilige Werkstoffpaarung, Oberflächenform und - rauheit sowie ggfls. auf eine Befettung sind auch deren Relativbewegungen zu beachten. Diese werden beispielsweise zwischen den Gleitschuhen 32 und der Stirnseite 23 des zweiten Spannarms 10 größer, wenn man die Gleitkontakte vom Mitnehmer 31 ausgehend in Richtung der einen Wand 29 betrachtet. Umgekehrt werden dabei die Relativbewegungen zwischen den Gleitschuhen 32 einerseits und dem Außenmantel 33 und dem Boden 35 des Federraums 27 andererseits kleiner.

Am Lagerflansch 4, der wie die Spannarme 9, 10 als Aluminium-Druckgussteil ausgeführt ist, ist eine Lagerhülse 14 angeformt, gegen deren Innenmantelfläche der erste Spannarm 9 und gegen deren Außenmantelfläche der zweite Spannarm 10 radial gleitgelagert sind. Die Gleitlagerung erfolgt radial innenseitig mittels eines Gleitlagerrings 15 und radial außenseitig mittels eines Gleitlagerrings 20, die wie die Gleitschuhe 32 aus Polyamid mit eingelagertem PTFE bestehen. Die Gleitlagerringe 15 und 20 dienen jeweils auch als Axiallager, wobei der Gleitlagerring 15 den ersten Spannarm 9 mittels einer damit verbundenen Verschlusshülse 17 axial gegen den Lagerflansch 4 lagert und wobei der Gleitlagerring 20 den zweiten Spannarm 10 axial gegen den Lagerflansch 4 lagert. Die jeweils entgegengesetzt gerichtete Axiallagerung der Spannarme 9, 10 erfolgt über den Gleitlagerring 22.

Eine die Verschlusshülse 17 umschließende Dichtlippe 41 aus Elastomerwerkstoff liegt dichtend an der generatorfernen Stirnseite 40 des Lagerflanschs 4 an und schützt die vorstehend beschriebene Gleitlagerung vor eindringendem Schmutz und Spritzwasser. Die generatorseitige Abdichtung oder Abschirmung der Lagerstellen erfolgt mittels einer Dichtlippe 43 einer elastomeren Dichtschnur 44, die sich größtenteils im Bereich des Federraums 27 und lediglich über einen Kreisbogen mit etwa 270° Bogenwinkel erstreckt und dort axial auf dem ersten Spannarm 9 aufgesteckt ist. Diese Steckverbindung ist durch mehrere segmentartige Axialvorsprünge 45 auf dem ersten Spannarm 9 und damit korrespondierenden Nuten in der Dichtschnur 44 sowohl axial als auch rotativ gegen Lösen gesichert. Die umfänglich außerhalb der Dichtschnur 44 verlaufenden Axialspalte sind beidseitig des zweiten Spannarms 10 durch Schmutz und Wasser abweisende Labyrinthe gedichtet.

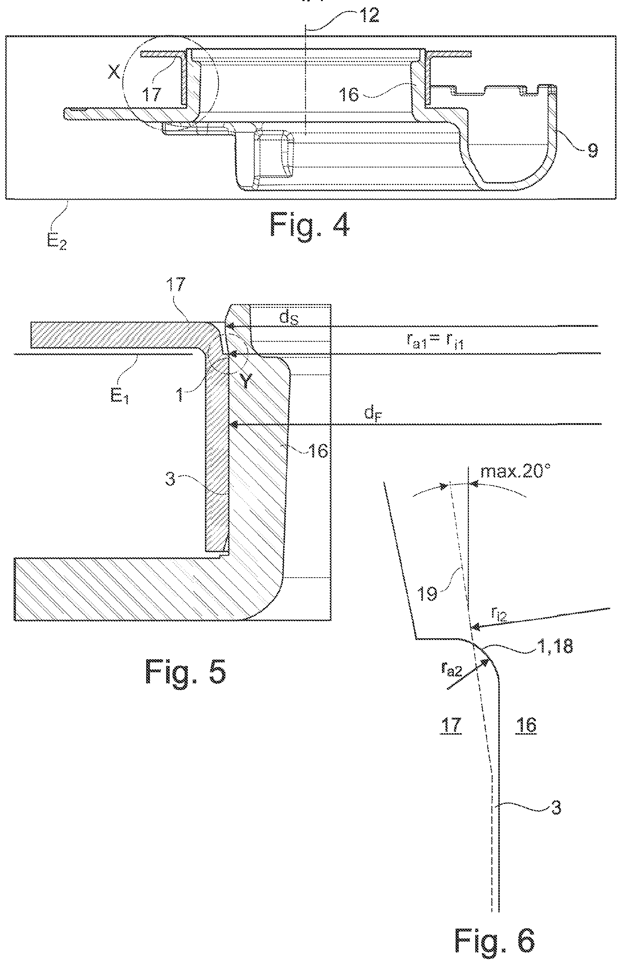

Die Verschlusshülse 17 ist ein Umformteil aus Stahlblech und mittels einer erfindungsgemäßen Pressfüge-Formschlussverbindung auf dem ersten Spannarm 9 befestigt. Die Pressfüge-Formschlussverbindung, die vorliegend den Kraftschluss einer Pressfügeverbindung mit einem Formschluss kombiniert, wird nachfolgend anhand der Figuren 4 bis 6 sowohl als spezielle Ausgestaltung am Riemenspanner 2 als auch allgemein erläutert.

Die Pressfügeverbindung ist eine Längspressverbindung mit einer zylindrischen Pressfuge 3 zwischen der Innenmantelfläche der Verschlusshülse 17 und der Außenmantelfläche eines Hülsenabschnitts 16 des ersten Spannarms 9. Im Allgemeinen Fall der erfindungsgemäßen Pressfüge-Formschlussverbindung stellen die Verschlusshülse 17 das Außenteil und der Hülsenabschnitt 16 das mit dem Außenteil zu verbindende Innenteil dar.

Die Formschlussverbindung ist durch einen Axialanschlag gebildet, der zusätzlich zur Pressfügeverbindung eine das Axialspiel der Gleitlagerungen erhöhende Verschiebung der Verschlusshülse 17 gegenüber dem Hülsenabschnitt 16 verhindert. Die an der Verschlusshülse 17 und am Hülsenabschnitt 16 angeformten Anschlagteile 18 bzw. 19 des Axialanschlags kontaktieren sich mit einem Kantenträger, der bei Axialbelastung des Anschlags stark überhöhte Materialspannungen und folglich ein gegenseitiges "Eingraben" der sich kontaktierenden Bauteiloberflächen erzeugt.

Der Kantenträger wird vorliegend dadurch erzeugt, dass der Anschlagteil 18 eine in der Verschlusshülse 17 angeformte Umlaufkante 1 ist, die sich am Ende der Pressfuge 3 befindet. Geometrisch und/oder im Sinne eines Hertzschen Linienkontakts ausgedrückt kontaktieren sich die Anschlagteile 18, 19 in einer ersten Hauptkrümmungsebene E₁, zu der die mit der Drehachse 12 identische Zylinderachse der Pressfuge 3 senkrecht steht, mit gleich großen Krümmungsradien rₐ₁, des Außenteils und rᵢ₁ des Innenteils und in einer zweiten Hauptkrümmungsebene E₂, in der die Zylinderachse der Pressfuge 3 liegt, mit unterschiedlich großen Krümmungsradien rₐ₂ des Außenteils und rᵢ₂ des Innenteils. In der zweiten Hauptkrümmungsebene E₂ sind die Krümmungen der Anschlagteile 18, 19 vorzugsweise einerseits konvex und anderseits nicht konkav. Vorliegend ist der Anschlagteil 18 des Außenteils (Verschlusshülse 17) im umformbedingten Toleranzbereich 0 < rₐ₂ < 1mm konvex gekrümmt und der Anschlagteil 19 des Innenteils (Hülsenabschnitt 17) ist kreiskegelstumpfförmig und mit rᵢ₂ ~ ∞ nicht gekrümmt. Der Anschlagteil 19 des Innenteils ist um maximal 20° gegenüber der Zylinderachse der Pressfuge 3 geneigt.

Im vorliegenden Ausführungsbeispiel erfordert die Längspressverbindung der Verschlusshülse 17 auf dem Hülsenabschnitt 16 eine elastische Radialverformbarkeit der zu verbindenden Bauteilabschnitte in dem Maße, dass das beim Aufpressen der Verschlusshülse 17 auf den Hülsenabschnitt 16 zu überwindende Übermaß der Anschlagteile 18, 19 durch die elastische Verformung kompensiert wird. Das zu überwindende Übermaß der Anschlagteile 18, 19 ist vorliegend die Durchmesserdifferenz ds - d_{F} mit:
ds = Durchmesser der Pressfuge 3
d_{F} = maximaler Durchmesser des inneren Anschlagteils 19

Ein wesentlicher Vorteil der so erzeugten Pressfüge-Formschlussverbindung gegenüber dem eingangs zitierten Stand der Technik besteht darin, dass der zusätzliche Prozessschritt der Verstemmung oder Rollierung zur Herstellung des Formschluss' entfällt und dass folglich nur ein einziger Fügeschritt zur Herstellung der Verbindung erforderlich ist.

## Patentansprüche

1. Pressfüge-Formschlussverbindung eines Innenteils mit einem Außenteil, das auf dem Innenteil befestigt ist, wobei:
- die Pressfügeverbindung eine zylindrische Pressfuge (3) zwischen dem Außenteil und dem Innenteil umfasst
- und die Formschlussverbindung durch einen Axialanschlag mit sich kontaktierenden Anschlagteilen (18, 19) am Innenteil und am Außenteil gebildet ist,
wobei die Pressfüge-Formschlussverbindung einen Kantenträger im Kontakt der Anschlagteile (18, 19), die sich in einer ersten Hauptkrümmungsebene (E₁), zu der die Zylinderachse der Pressfuge (3) senkrecht steht, mit gleich großen Krümmungsradien (rₐ₁, rᵢ₁) kontaktieren, umfasst,
**dadurch gekennzeichnet, dass** sich die Anschlagteile (18, 19) in einer zweiten Hauptkrümmungsebene (E₂), in der die Zylinderachse der Pressfuge (3) liegt, mit unterschiedlich großen Krümmungsradien (rₐ₂, rᵢ₂) kontaktieren.

2. Pressfüge-Formschlussverbindung nach Anspruch 1, **dadurch gekennzeichnet, dass** der Kantenträger ein Hertzscher Linienkontakt ist.

3. Pressfüge-Formschlussverbindung nach Anspruch 1 oder 2, **dadurch gekennzeichnet, dass** sich die Anschlagteile (18, 19) in der zweiten Hauptkrümmungsebene (E₂) mit einer konvexen Krümmung und einer nicht konkaven Krümmung kontaktieren.

4. Pressfüge-Formschlussverbindung nach Anspruch 3, **dadurch gekennzeichnet, dass** jeweils in der zweiten Hauptkrümmungsebene (E₂) der Anschlagteil (18) des Außenteils konvex gekrümmt ist und der Anschlagteil (19) des Innenteils nicht gekrümmt ist.

5. Pressfüge-Formschlussverbindung nach Anspruch 4, **dadurch gekennzeichnet, dass** der Anschlagteil (19) des Innenteils um maximal 20° gegenüber der Zylinderachse der Pressfuge (3) geneigt ist.

6. Pressfüge-Formschlussverbindung nach Anspruch 4 oder 5, **dadurch gekennzeichnet, dass** der Anschlagteil (18) des Außenteils aus Stahl besteht und der Anschlagteil (19) des Innenteils aus Aluminium besteht, wobei in der zweiten Hauptkrümmungsebene (E₂) für den Krümmungsradius rₐ₂ des Anschlagteils (18) des Außenteils gilt: 0 < rₐ₂ < 1 mm.

7. Pressfüge-Formschlussverbindung nach einem der vorhergehenden Ansprüche, **dadurch gekennzeichnet, dass** die Pressfügeverbindung eine Längspressverbindung ist, wobei das Außenteil und das Innenteil im Bereich der Formschlussverbindung eine elastische Radialverformbarkeit haben, die das beim Aufpressen des Außenteils auf das Innenteil zu überwindende Übermaß der Anschlagteile (18, 19) kompensiert.

8. Nebenaggregate-Riementrieb, umfassend einen Generator mit einer vom Riemen (36) umschlungenen Generatorriemenscheibe (8) und einen Riemenspanner (2) mit:
- einem am Generator befestigten Lagerflansch (4), der die Drehachse (12) der Generatorriemenscheibe (8) umschließt,
- einem ersten Spannarm (9) und einem zweiten Spannarm (10), die kreisringförmig ausgebildet und am Lagerflansch (4) gegenseitig schwenkbar gelagert sind,
- zwei an den Spannarmen (9, 10) angebrachten Spannrollen (6, 7), die den Riemen (36) in dessen Umlaufrichtung vor und hinter der Generatorriemenscheibe (8) mit Vorspannkraft beaufschlagen,
- einer zwischen den Spannarmen (9, 10) eingespannten Feder (11) zur Erzeugung der Vorspannkraft,
- und einer mit dem ersten Spannarm (9) verbundenen Verschlusshülse (17), die mittels einer Pressfüge-Formschlussverbindung gemäß einem der vorhergehenden Ansprüche auf einem Hülsenabschnitt (16) des ersten Spannarms (9) befestigt ist, wobei der erste Spannarm (9) mittels der Verschlusshülse (17) radial gegen eine Innenmantelfläche des Lagerflanschs (4) gleitgelagert ist und der zweite Spannarm (10) radial gegen eine Außenmantelfläche des Lagerflanschs (4) gleitgelagert ist.

## Claims

1. A press-fit-interlocking connection of an inner part to an outer part, which is fastened on the inner part, wherein:
- the press-fit connection comprises a cylindrical press joint (3) between the outer part and the inner part,
- and the interlocking connection is formed by an axial stop with contacting stop parts (18, 19) on the inner part and on the outer part,
wherein the press-fit-interlocking connection comprises an edge support in contact with the stop parts (18, 19), which
contact one another in a first principal plane of curvature (E₁), to which the cylinder axis of the press joint (3) is perpendicular, with radii of curvature (rₐ₁, rᵢ₁) of equal size, **characterized in that** the stop parts (18, 19)
contact one another in a second principal plane of curvature (E₂), in which the cylinder axis of the press joint (3) lies, with radii of curvature (rₐ₂, rᵢ₂) of different sizes.

2. The press-fit-interlocking connection according to claim 1, **characterized in that** the edge support is a Hertzian line contact.

3. The press-fit-interlocking connection according to claim 1 or 2, **characterized in that** the stop parts (18, 19) contact one another in the second principal plane of curvature (E₂) with a convex curvature and a non-concave curvature.

4. The press-fit-interlocking connection according to claim 3, **characterized in that,** in each case, in the second principal plane of curvature (E₂), the stop part (18) of the outer part is convexly curved and the stop part (19) of the inner part is not curved.

5. The press-fit-interlocking connection according to claim 4, **characterized in that** the stop part (19) of the inner part is inclined by a maximum of 20° relative to the cylinder axis of the press joint (3).

6. The press-fit-interlocking connection according to claim 4 or 5, **characterized in that** the stop part (18) of the outer part is made of steel and the stop part (19) of the inner part is made of aluminium, wherein in the second principal plane of curvature (E₂) the following applies to the radius of curvature rₐ₂ of the stop part (18) of the outer part: 0 < rₐ₂ < 1 mm.

7. The press-fit-interlocking connection according to any one of the preceding claims, **characterized in that** the press-fit connection is a longitudinal press-fit connection, wherein the outer part and the inner part exhibit an elastic radial deformability in the region of the interlocking connection, which compensates for the interference of the stop parts (18, 19) to be overcome when the outer part is pressed onto the inner part.

8. An auxiliary assembly belt drive comprising a generator having a generator pulley (8) wrapped by the belt (36) and a belt tensioner (2) having:
- a bearing flange (4) fastened to the generator, which surrounds the axis of rotation (12) of the generator pulley (8),
- a first tensioning arm (9) and a second tensioning arm (10), which are of annular design and are mounted on the bearing flange (4) so as to be mutually pivotable,
- two tensioning rollers (6, 7) attached to the tensioning arms (9, 10), which apply a pretensioning force to the belt (36) in its direction of rotation in front of and behind the generator pulley (8),
- a spring (11) clamped between the tensioning arms (9, 10) for the generation of the pretensioning force,
- and a locking sleeve (17) connected to the first tensioning arm (9), which is fastened on a sleeve section (16) of the first tensioning arm (9) by means of a press-fit-interlocking connection according to any one of the preceding claims, wherein the first tensioning arm (9) is mounted so as to slide radially against an inner lateral surface of the bearing flange (4) by means of the locking sleeve (17) and the second tensioning arm (10) is mounted so as to slide radially against an outer lateral surface of the bearing flange (4).

## Revendications

1. Liaison de presse par complémentarité de forme d'une pièce interne avec une pièce externe qui est fixée sur la pièce interne :
- la liaison de presse comprenant une presse cylindrique (3) entre la pièce externe et la pièce interne
- et la liaison par complémentarité de forme est formée par une butée axiale avec des pièces de butée (18, 19) en contact mutuel sur la pièce interne et sur la pièce externe,
la liaison de presse par complémentarité de forme comprenant un support d'arête en contact avec les pièces de butée (18, 19) qui
entrent en contact dans un premier plan de courbure principale (E₁), auquel l'axe de cylindre de la presse (3) est perpendiculaire, avec des rayons de courbure (rₐ₁, rᵢ₁) de taille identique, **caractérisée en ce que** les pièces de butée (18, 19)
sont en contact dans un second plan de courbure principale (E₂), dans lequel se situe l'axe de cylindre de la presse (3), avec des rayons de courbure (rₐ₂, rᵢ₂) de taille différente.

2. Liaison de presse par complémentarité de forme selon la revendication 1, **caractérisée en ce que** le support d'arête est un contact linéaire hertzien.

3. Liaison de presse par complémentarité de forme selon la revendication 1 ou 2, **caractérisée en ce que** les pièces de butée (18, 19) sont en contact dans le second plan de courbure principale (E₂) avec une courbure convexe et une courbure non concave.

4. Liaison de presse par complémentarité de forme selon la revendication 3, **caractérisée en ce que** respectivement dans le second plan de courbure principale (E₂) la pièce de butée (18) de la pièce externe est courbée de manière convexe et la pièce de butée (19) de la pièce interne n'est pas courbée.

5. Liaison de presse par complémentarité de forme selon la revendication 4, **caractérisée en ce que** la pièce de butée (19) de la pièce interne est inclinée selon au maximum 20° par rapport à l'axe de cylindre de la presse (3).

6. Liaison de presse par complémentarité de forme selon la revendication 4 ou 5, **caractérisée en ce que** la pièce de butée (18) de la pièce externe est constituée d'acier et la pièce de butée (19) de la pièce interne est constituée d'aluminium, dans laquelle dans le second plan de courbure principale (E₂) pour le rayon de courbure rₐ₂ de la pièce de butée (18) de la pièce externe :
0 < rₐ₂ < 1 mm est valable.

7. Liaison de presse par complémentarité de forme selon l'une quelconque des revendications précédentes, **caractérisée en ce que** la liaison de presse est une liaison de presse longitudinale, dans laquelle la pièce externe et la pièce interne ont une déformabilité élastique radiale dans la zone de la liaison par complémentarité de forme, qui compense la surcote des pièces de butée (18, 19) lors de la compression de la pièce externe sur la pièce interne.

8. Entraînement par courroie des accessoires, comprenant un alternateur avec une poulie d'alternateur (8) entourée par la courroie (36) et un tendeur de courroie (2) comportant :
- une bride de palier (4) fixée à l'alternateur, qui entoure l'axe de rotation (12) de la poulie d'alternateur (8),
- un premier bras de tension (9) et un second bras de tension (10) qui sont formés annulaires et sont montés sur la bride de palier (4) de manière à pouvoir pivoter l'un par rapport à l'autre,
- deux rouleaux de tension (6, 7) appliqués sur les bras de tension (9, 10), qui appliquent une force de précontrainte sur les courroies (36) dans leur sens de rotation avant et après la poulie d'alternateur (8),
- un ressort (11) tendu entre les bras de tension (9, 10) pour la génération de la force de précontrainte,
- et une douille de fermeture (17) reliée au premier bras de tension (9), qui est fixée au moyen d'une liaison de presse par complémentarité de forme selon l'une quelconque des revendications précédentes sur une section de douille (16) du premier bras de tension (9), le premier bras de tension (9) au moyen de la douille de fermeture (17) étant monté radialement de manière coulissante contre une surface d'enveloppe interne de la bride de palier (4) et le second bras de tension (10) étant monté radialement de manière coulissante contre une surface d'enveloppe externe de la bride de palier (4).
